# EUROPEAN PATENT APPLICATION

(11) **EP 4 386 897 A1**
(43) Date of publication of application: **19.06.2024**
(21) Application number: 22855737.7
(22) Date of filing: 14.06.2022
(51) Int. Cl.: H01M 4/36, H01M 4/134, H01M 4/38, H01M 4/66, H01M 4/80, H01M 10/052, H01M 10/0562, H01M 10/0585

(54) **BATTERY**

(30) Priority: 10.08.2021 JP 2021130968; 10.08.2021 JP 2021130969; 20.04.2022 JP 2022069727
(71) Applicant: Panasonic Intellectual Property Management Co., Ltd., Kadoma-shi, Osaka 571-0057 (JP)
(72) Inventor: OTO, Takashi, Kadoma-shi, Osaka 571-0057 (JP); OMAE, Takanori, Kadoma-shi, Osaka 571-0057 (JP); FUJIMOTO, Masahisa, Kadoma-shi, Osaka 571-0057 (JP); SAGARA, Akihiko, Kadoma-shi, Osaka 571-0057 (JP)
(74) Representative: Grünecker Patent- und Rechtsanwälte PartG mbB
(86) International application number: PCT/JP2022/023790
(87) International publication number: WO 2023/017673

(57) **Abstract**

A battery of the present disclosure includes a first electrode, a second electrode, and a solid electrolyte layer disposed between the first electrode and the second electrode, in which the solid electrolyte layer includes a first solid electrolyte, the first electrode includes: a substrate including a porous body; and an active material layer disposed on a surface of the substrate, and the active material layer contains an alloy that contains Bi and Ni.

## Description

### Technical Field

The present disclosure relates to a battery.

### Background Art

Lithium secondary batteries have been a subject of active research and development in recent years, and their battery characteristics, such as charge-discharge voltage, charge-discharge cycle life, and storage properties, are strongly dependent on electrodes used therein. Thus, battery characteristics have been improved by improving electrode active materials.

For example, lithium secondary batteries that use electrodes containing aluminum, silicon, tin, or the like that electrochemically alloys with lithium during charging have been proposed from early days. PTL 1 discloses a lithium secondary battery equipped with a negative electrode containing a negative electrode material made of an alloy containing silicon, tin, and a transition metal, a positive electrode, and an electrolyte.

PTL 2 discloses a lithium secondary battery equipped with a negative electrode that uses, as an active material, a silicon thin film formed on a current collector, a positive electrode, and an electrolyte.

Another example of the metal that alloys with lithium is bismuth (Bi). NPL 1 discloses a negative electrode that is produced by using a Bi powder and that contains Bi as a negative electrode active material.

### Citation List

### Patent Literature

PTL 1: Japanese Patent No. 4898737
PTL 2: Japanese Patent No. 3733065

### Non Patent Literature

NPL 1: YAMAGUCHI, Hiroyuki, "Amorphous Polymeric Anode Materials from Poly(acrylic acid) and Metal Oxide for Lithium Ion Batteries", Mie University, doctoral dissertation, 2015

### Summary of Invention

### Technical Problem

The present disclosure provides a battery that has a structure suitable for improving the charge-discharge characteristics.

### Solution to Problem

A battery according to the present disclosure includes:
a first electrode;
a second electrode; and
a solid electrolyte layer disposed between the first electrode and the second electrode,
wherein the solid electrolyte layer contains a first solid electrolyte,
the first electrode includes:
   a substrate including a porous body; and
   an active material layer disposed on a surface of the substrate, and
the active material layer contains an alloy that contains Bi and Ni. Advantageous Effects of Invention

The present disclosure can provide a battery that has a structure suitable for improving the charge-discharge characteristics.

### Brief Description of Drawings

[Fig. 1] Fig. 1 is a schematic cross-sectional view of a structural example of a battery according to an embodiment of the present disclosure.
[Fig. 2] Fig. 2 is a schematic partially enlarged cross-sectional view of a structural example of a first electrode of a battery according to an embodiment of the present disclosure.
[Fig. 3] Fig. 3 is a schematic cross-sectional view of a modification example of the battery according to an embodiment of the present disclosure.
[Fig. 4] Fig. 4 is a graph indicating one example of an X-ray diffraction pattern of an active material layer constituted by a BiNi thin film prepared on a nickel mesh.
[Fig. 5] Fig. 5 is a graph showing the results of a charge-discharge test of a test cell of Example 1.
[Fig. 6] Fig. 6 is a graph indicating one example of an X-ray diffraction pattern of an active material layer constituted by a BiNi thin film prepared on a porous nickel in Example 2.
[Fig. 7] Fig. 7 is a graph showing the results of a charge-discharge test of a test cell of Example 2.
[Fig. 8] Fig. 8 is a graph indicating one example of an X-ray diffraction pattern of an active material layer constituted by a BiNi thin film prepared on a porous nickel in Example 3.
[Fig. 9] Fig. 9 is a graph showing the results of a charge-discharge test of a test cell of Example 3.
[Fig. 10] Fig. 10 is a graph indicating one example of an X-ray diffraction pattern of an active material layers constituted by a BiNi thin film prepared on a nickel foil.
[Fig. 11] Fig. 11 is a graph showing the results of the charge-discharge test of the test cell of Reference Example 1.
[Fig. 12] Fig. 12 is a graph indicating one example of X-ray diffraction patterns of the first electrode used in Example 1 before charging, after charging, and after discharging. Description of Embodiments

### (Findings that formed the basis of the present disclosure)

As described in the "Background Art" section, battery characteristics of lithium secondary batteries have been improved by improving electrode active materials.

When lithium metal is used as a negative electrode active material, a lithium secondary battery that has high energy densities per weight and per volume is obtained. However, in a lithium secondary battery having this structure, lithium dendrites are deposited during charging. Since some of the deposited lithium metal reacts with the electrolyte solution, there have been issues of low charge-discharge efficiency and poor cycle characteristics.

To address this, a proposal to use carbon, in particular, graphite, as a negative electrode has been made. In a negative electrode containing carbon, charging and discharging are realized by lithium intercalation into and deintercalation from carbon. When a negative electrode has such a structure, the charge-discharge mechanism does not cause deposition of lithium metal dendrites. In addition, a lithium secondary battery that has a negative electrode having such a structure has excellent reversibility due to topotactic reactions and has nearly 100% charge-discharge efficiency. Due to these features, lithium secondary batteries having negative electrodes containing carbon, in particular, graphite, have been put to practical use. However, the theoretical capacity density of graphite is 372 mAh/g, which is about one tenth of the theoretical capacity density of lithium metal, 3884 mAh/g. Thus, the active material capacity density of a negative electrode containing graphite is low. Furthermore, since the actual capacity density of graphite is nearly as high as the theoretical capacity density, increasing the capacity of the negative electrode containing graphite has reached a limit.

To address this, lithium secondary batteries that use electrodes containing aluminum, silicon, tin, or the like that electrochemically alloys with lithium during charging have been proposed from early days. The capacity density of a metal that alloys with lithium is far larger than the capacity density of graphite. In particular, the theoretical capacity density of silicon is high. Thus, an electrode containing a material, such as aluminum, silicon, or tin, that alloys with lithium has a good prospect as a negative electrode for a high-capacity battery, and various types of secondary batteries that use such negative electrodes have been proposed (PTL 1).

However, a negative electrode that contains the aforementioned metal that alloys with lithium expands upon lithium intercalation and contracts upon lithium deintercalation. Repeating such expansion and contraction during charging and discharging breaks the alloy serving as the electrode active material into fine particles due to charging and discharging and deteriorates the current collecting properties of the negative electrode; thus, sufficient cycle characteristics have not been obtained. The following attempts have been made to address these issues. For example, in one attempt, silicon is sputter-deposited or vapor-deposited on a roughened surface of a current collector, or tin is deposited by electroplating (PTL 2). According to this attempt, the active material, in other words, a metal that alloys with lithium, forms a thin film and closely adheres to the current collector, and thus current collecting properties are rarely degraded despite repeated expansion and contraction of the negative electrode caused by lithium intercalation and deintercalation.

However, the production cost for forming an active material by sputtering or vapor deposition as described above is high, and this approach is not practical. It is practical to form an active material by less costly electroplating; however, silicon is difficult to electroplate. Moreover, tin, which is easy to electroplate, has issues of poor discharge flatness and difficulty in using as an electrode of a battery.

Another metal that alloys with lithium is bismuth (Bi). Bi forms compounds, LiBi and Li₃Bi, with lithium (Li). The potential of LiBi is not much different from the potential of LLBi. In contrast, tin, which has poor discharge flatness, forms several compounds with lithium, and the potentials of the compounds significantly differ from one another. In other words, unlike tin, Bi does not have properties of forming multiple compounds, with lithium, having significantly different potentials from one another. Thus, an electrode that contains Bi as the active material has excellent discharge flatness due to the flat potential. Thus, an electrode that contains Bi as the active material is considered to be suitable as an electrode of a battery.

However, Bi has poor malleability and ductility and is difficult to produce metal sheets or foils therefrom; thus, the obtained form is either beads or powder. Thus, an electrode produced by applying a Bi powder to a current collector is being explored as the electrode containing Bi as the active material. However, the electrode produced by using a Bi powder breaks into fine particles as charging and discharging are repeated, and the current collecting properties are thereby degraded; thus, sufficient cycle characteristics have not been obtained. For example, in NPL 1, an electrode containing Bi as an active material is prepared by using a Bi powder and polyvinylidene fluoride (PVdF) or polyimide (PI) as a binder. In NPL 1, a battery produced by using this electrode is charged and discharged. However, the results of the initial charge-discharge curve and the cycle characteristics of the produced electrode are very poor. Although measurement is taken at a very low-rate equivalent to 0.042 IT, the initial charge-discharge efficiency is low, the cycle deterioration is extensive, and the battery is far from practical application. Regarding the cycle deterioration, NPL 1 points out that the active material becomes pulverized as the Bi active material expands during Li intercalation and contracts during Li deintercalation, and presumably thus the electron conduction paths no longer form and the capacity decreases.

The present inventors have focused on Bi which does not have a property of forming, with Li, multiple compounds having large potential differences and which has excellent discharge flatness, and have conducted extensive studies on batteries with which cycle characteristics can be improved. As a result, the present inventors have arrived at a novel technical conception that, when an alloy containing Bi and Ni is used as an active material, the battery exhibits improved cycle characteristics.

The present inventors have further studied batteries that use, as an active material, an alloy that contains Bi and Ni.

For example, a Ni foil is electroplated with Bi to form a Bi electroplating layer, and then the Ni foil and the Bi electroplating layer are heat-treated to cause solid-phase diffusion of Ni from the Ni foil to the Bi electroplating layer. As a result, an alloy that contains Bi and Ni (for example, BiNi), which is an intermetallic compound, can be synthesized. This alloy containing Bi and Ni is obtained by causing Ni to diffuse in a solid phase from the Ni foil to the Bi electroplating layer by heat treatment. In this manner, the interface between the Ni foil, which can function as a current collector, and the active material BiNi is strongly bonded, and degradation of the cycle characteristics caused by delamination at the current collector/active material layer interface caused by expansion and contraction of the active material in the electrodes during charging and discharging of the battery can be alleviated.

However, as the present inventors carried out further studies, it has been found that there are some room for improvement for the charge-discharge characteristics, for example, the initial efficiency, of the electrodes obtained by synthesizing an alloy containing Bi and Ni by using a Bi electroplating layer formed on a Ni foil as described above. The present inventors have conducted specific studies on the charge-discharge characteristics of an electrode that has a structure in which a Bi- and Ni-containing alloy is formed on a Ni foil and in which BiNi is synthesized by heat-treating the Ni foil electroplated with Bi. In particular, a battery in which an electrode containing BiNi as the Bi- and Ni-containing alloy on the Ni foil was used as a working electrode, indium-lithium metal was used as a counter electrode, and a solid electrolyte Li₃YBr₄Cl₂ was used as the electrolyte layer was charged and discharged. The result has found that, with respect to the theoretical capacity of BiNi, 300 mAh/g, the initial charge capacity was less than or equal to 70%, the discharge capacity was less than or equal to 60%, and the initial efficiency was 79.8%.

The present inventors have conducted further studies and found that the cause for low charge/discharge capacity and initial efficiency of the battery that uses an electrode having a structure in which a Bi- and Ni-containing alloy is formed on the Ni foil is as follows.

The cause of the low charge/discharge capacity relative to the theoretical capacity and the low initial efficiency is presumably that the Bi- and Ni-containing alloy, for example, BiNi, serving as an active material has an inherent property to diffuse slowly in a solid phase, and that the Bi- and Ni-containing alloy synthesized by heat treatment from the Bi electroplating layer on the Ni foil has a less active material layer/electrolyte interfacial quantity, thereby increasing the resistance in Li ion conduction.

The present inventors have conducted extensive studies and thus found that the charge-discharge characteristics can be improved when an electrode that contains a Bi- and Ni-containing alloy as an active material is prepared by forming a Bi- and Ni-containing alloy on a surface of a substrate including a porous body, and using the resulting layer containing the Bi- and Ni-containing alloy as an active material layer. Thus, the present disclosure has been made.

### (Summary of one aspect of the present disclosure)

According to a first aspect of the present disclosure, there is provided a battery including:
a first electrode;
a second electrode; and
a solid electrolyte layer disposed between the first electrode and the second electrode,
in which the solid electrolyte layer contains a first solid electrolyte,
the first electrode includes:
   a substrate including a porous body; and
   an active material layer disposed on a surface of the substrate, and
the active material layer contains an alloy that contains Bi and Ni.

Regarding the area at which the active material and the solid electrolyte can be in contact with each other, the area of the active material layer is larger when the active material layer is formed on a surface of a porous substrate than when the active material layer is formed on a surface of a foil substrate. Thus, in the invention of the first embodiment, if the same amount of the active material is to be provided on a substrate, a thinner active material layer can be formed than when the active material is formed on a foil substrate. As a result, in the active material that contains a Bi- and Ni-containing alloy, the load characteristics attributable to the solid phase diffusion of Li ions are improved, in particular, the load characteristics during discharging are improved. Thus, according to the battery of the first embodiment, the charge-discharge characteristics can be improved, for example, the initial efficiency can be improved. As described above, the battery of the first embodiment has a structure suitable for improving the charge-discharge characteristics.

According to a second aspect of the present disclosure, for example, in the battery according to the first aspect, the active material layer may contain BiNi.

According to the battery of the second aspect, the charge-discharge characteristics can be further improved.

According to a third aspect of the present disclosure, for example, in the battery according to the second aspect, the active material layer may contain the BiNi as a main component of an active material.

The battery of the third aspect has a higher capacity and improved charge-discharge characteristics.

According to a fourth aspect of the present disclosure, for example, in the battery according to the third aspect, the active material layer may contain substantially only the BiNi as the active material.

The battery of the fourth aspect has a higher capacity and improved charge-discharge characteristics.

According to a fifth aspect of the present disclosure, for example, in the battery of any one of the second to fourth aspects, the BiNi has a crystal structure of a space group C2/m.

The battery of the fifth aspect has a higher capacity and improved charge-discharge characteristics.

According to a sixth aspect of the present disclosure, for example, in the battery of any one of the first to fifth aspects, the active material layer may contain at least one selected from the group consisting of LiBi and Li₃Bi.

The battery of the sixth aspect has a higher capacity and improved charge-discharge characteristics.

According to a seventh aspect of the present disclosure, for example, in the battery of any one of the first to sixth aspects, the active material layer may be free of an electrolyte.

The battery of the seventh aspect has a higher capacity and improved charge-discharge characteristics.

According to an eighth aspect of the present disclosure, for example, in the battery of any one of the first to seventh aspects, the substrate may contain Ni.

The battery of the eighth aspect has a higher capacity and improved charge-discharge characteristics.

According to a ninth aspect of the present disclosure, for example, in the battery of any one of the first to eighth aspects, the active material layer may be a heat-treated plating layer.

The battery of the ninth aspect has a higher capacity and improved charge-discharge characteristics.

According to a tenth aspect of the present disclosure, for example, in the battery of any one of the first to ninth aspects, the first solid electrolyte may contain a first halide solid electrolyte, and the first halide solid electrolyte may be substantially free of sulfur.

The battery of the tenth has a higher capacity and improved charge-discharge characteristics.

According to an eleventh aspect of the present disclosure, for example, in the battery of any one of the first to tenth aspects, the first solid electrolyte may contain a first sulfide solid electrolyte.

The battery of the eleventh aspect has a higher capacity and improved charge-discharge characteristics.

According to a twelfth aspect of the present disclosure, for example, in the battery of any one of the first to eleventh aspects, the first electrode may further include a second solid electrolyte in contact with the active material layer.

In the first electrode of the battery of the twelfth aspect, the active material layer is disposed on a surface of a substrate including a porous body, and a solid electrolyte (in other words, a second solid electrolyte) is disposed in contact with the active material layer. This structure increases the area of the interface between the active material and the solid electrolyte in the first electrode, and thus the interfacial resistance between the active material and the solid electrolyte can be decreased. Thus, the battery of the twelfth aspect has good charge-discharge characteristics. As described above, the battery of the twelfth aspect has a structure suitable for improving the charge-discharge characteristics.

According to a thirteenth aspect of the present disclosure, for example, in the battery of the twelfth aspect, the second solid electrolyte may contain a second halide solid electrolyte, and the second halide solid electrolyte may be substantially free of sulfur.

The battery of the thirteenth aspect is safer and has improved charge-discharge characteristics.

According to a fourteenth aspect of the present disclosure, for example, in the battery of the thirteenth aspect, the second halide solid electrolyte may be represented by formula (1) below:

Formula (1): Li_{α}M_{β}X_{γ},

where, α, β, and γ are each a value greater than 0, M is at least one selected from the group consisting of metalloids and metal elements other than Li, and X is at least one selected from the group consisting of F, Cl, Br, and I.

The battery of the fourteenth aspect has further improved charge-discharge characteristics.

According to a fifteenth aspect of the present disclosure, for example, in the battery of the fourteenth aspect, according to the first aspect, M in formula (1) may contain Y.

The battery of the fifteenth aspect has further improved charge-discharge characteristics.

According to a sixteenth aspect, for example, in the battery of the fourteenth or fifteenth aspect, X in formula (1) may be at least one selected from the group consisting of Cl, Br, and I.

Thus, the battery of the sixteenth aspect has further improved charge-discharge characteristics.

According to a seventeenth aspect of the present disclosure, for example, in the battery of one of the fourteenth to sixteenth aspects, the second solid electrolyte may contain at least one selected from the group consisting of Li₃YBr₃Cl₃ and Li₃YBr₂Cl₄.

The battery of the seventeenth aspect has further improved charge-discharge characteristics.

According to an eighteenth aspect of the present disclosure, for example, in the battery of any one of the twelfth to seventeenth aspects, the second solid electrolyte may contain a second sulfide solid electrolyte.

The battery of the eighteenth aspect has a higher capacity and improved charge-discharge characteristics.

According to a nineteenth aspect of the present disclosure, for example, in the battery of any one of the twelfth to eighteenth aspects, pores in the substrate may contain the second solid electrolyte.

According to the battery of the nineteenth aspect, the second solid electrolyte is contained in the pores in the substrate of the first electrode, that is, the pores of the porous body. Due to this feature, the battery of the nineteenth aspect has a higher capacity and improved charge-discharge characteristics.

According to a twentieth aspect of the present disclosure, for example, the first electrode and the second electrode in the battery according to any one of the first to nineteenth aspects may be a negative electrode and a positive electrode, respectively.

The battery of the twentieth aspect has a higher capacity and improved charge-discharge characteristics.

### (Embodiments of the present disclosure)

Hereinafter, the embodiments of the present disclosure are described with reference to the drawings. All of the descriptions below are comprehensive or specific examples. The numerical values, compositions, shapes, film thickness, electrical characteristics, secondary battery structure, etc., indicated below are merely examples, and do not limit the present disclosure.

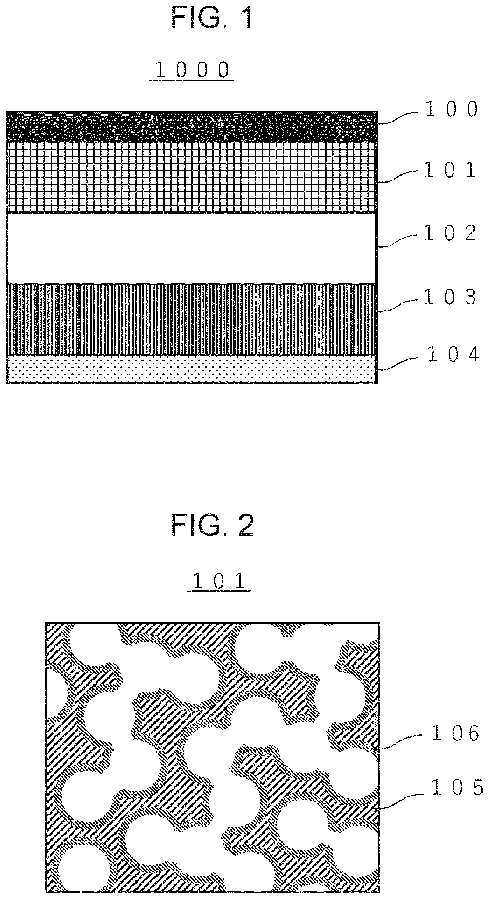

Fig. 1 is a schematic cross-sectional view of a structural example of a battery 1000 according to an embodiment of the present disclosure.

The battery 1000 has a first electrode 101, a second electrode 103, and a solid electrolyte layer 102 disposed between the first electrode 101 and the second electrode 103. Fig. 2 is a schematic partially enlarged cross-sectional view of a structural example of the first electrode 101 of the battery 1000 according to an embodiment of the present disclosure. As illustrated in Fig. 2, the first electrode 101 includes a substrate 105 including a porous body, and an active material layer 106 disposed on a surface of the substrate 105. The active material layer 106 contains a Bi- and Ni-containing alloy. The active material layer 106 contains, for example, BiNi as the Bi- and Ni-containing alloy.

As illustrated in Fig. 1, the battery 1000 of the present embodiment may further include, for example, a first current collector 100 in contact with the first electrode 101. In addition, the battery 1000 of the present embodiment may further include, for example, a second current collector 104 in contact with the second electrode 103. Electricity can be highly efficiently obtained from the battery 1000 by including the first current collector 100 and the second current collector 104.

In the first electrode 101 of the battery 1000, the active material layer 106 containing the Bi- and Ni-containing alloy is formed on a surface of the substrate 105 including a porous body. For example, as illustrated in Fig. 2, the active material layer 106 is also formed on inner walls of pores in the substrate 105. Thus, regarding the area at which the active material and the solid electrolyte can be in contact with each other in the battery 1000, the area of the active material layer 106 is larger when the active material layer 106 is formed on a surface of the substrate 105 including a porous body, than when the active material layer 106 is formed on a surface of a foil substrate. Thus, if the same amount of the active material is to be provided on the substrate of the battery 1000, a thinner active material layer 106 can be formed than when the active material layer 106 is formed on a foil substrate. As a result, in the active material layer 106 that contains the Bi- and Ni-containing alloy, the load characteristics attributable to the solid phase diffusion of Li ions are improved, for example, the load characteristics during discharging are improved. Thus, according to the battery of the present embodiment, the charge-discharge characteristics can be improved, in particular, the initial efficiency can be improved. As described above, the battery 1000 of the present embodiment has a structure suitable for improving the charge-discharge characteristics.

Note that in the first electrode 101 illustrated in Fig. 2, the active material layer 106 is formed as a thin film on inner walls of the pores in the substrate 105, and the pores are present to provide a relatively high porosity. However, the structure of the first electrode 101 is not limited to this. For example, the first electrode 101 may have an active material layer 106 substantially filling the insides of the pores in the substrate 105 and may have a low porosity. Even when the first electrode 101 has this structure, the boundary between the substrate 105 and the active material layer 106 can be clearly distinguished, and it can be said that, in the first electrode 101, the substrate 105 includes a porous body and the active material layer 106 is formed on a surface of the substrate 105. The active material layer 106 may be formed on some parts of inner walls of multiple pores or may be formed on substantially all parts of inner walls of the pores.

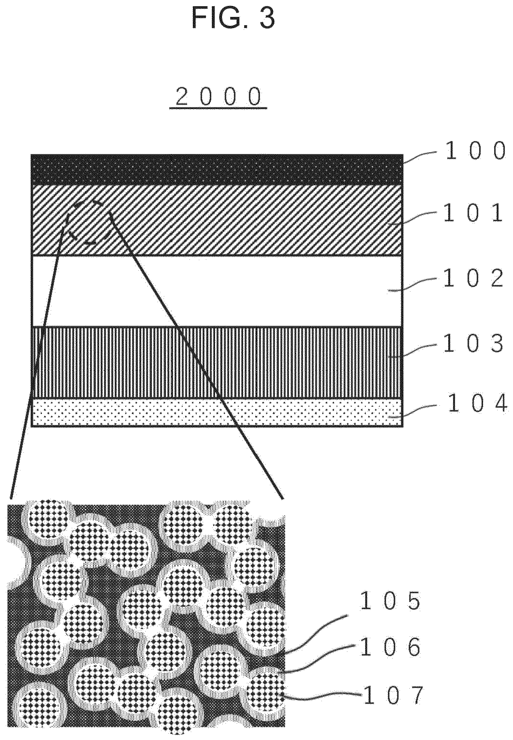

A modification example of the battery 1000 according to an embodiment of the present disclosure will now be described. Fig. 3 is a schematic cross-sectional view of a modification example of the battery according to an embodiment of the present disclosure.

The battery 2000 illustrated in Fig. 3 is different from the battery 1000 in that the battery 2000 further includes a second solid electrolyte 107 in contact with the active material layer 106, but the features other than the second solid electrolyte 107 are identical to those of the battery 1000.

The battery 2000 has a first electrode 101, a second electrode 103, and a solid electrolyte layer 102 disposed between the first electrode 101 and the second electrode 103. The first electrode 101 includes a substrate 105 including a porous body, an active material layer 106 disposed on a surface of the substrate 105, and a second solid electrolyte 107 in contact with the active material layer 106. The active material layer 106 contains a Bi- and Ni-containing alloy. The active material layer 106 contains, for example, BiNi as the Bi- and Ni-containing alloy.

As illustrated in Fig. 3, the battery 2000 may further include, for example, a first current collector 100 in contact with the first electrode 101 as with the battery 1000. In addition, the battery 2000 may further include, for example, a second current collector 104 in contact with the second electrode 103 as with the battery 1000. Electricity can be highly efficiently obtained from the battery 2000 by including the first current collector 100 and the second current collector 104.

In the first electrode 101 of the battery 2000, the active material layer 106 containing the Bi- and Ni-containing alloy is formed on a surface of the substrate 105 including a porous body. For example, as illustrated in Fig. 3, the active material layer 106 is also formed on inner walls of pores in the substrate 105. Furthermore, the first electrode 101 of the battery 2000 further includes a second solid electrolyte 107 in contact with the active material layer 106. For example, the second solid electrolyte 107 may be contained in the pores in the substrate 105. Thus, regarding the area at which the active material and the solid electrolyte can be in contact with each other in the battery 2000, the area of the active material layer 106 is larger when the active material layer 106 is formed on a surface of the substrate 105 including a porous body, than when the active material layer 106 is formed on a surface of a foil substrate. Thus, if the same amount of the active material is to be provided on the substrate of the battery 2000, a thinner active material layer 106 can be formed than when the active material layer 106 is formed on a foil substrate. As a result, in the active material layer 106 that contains a Bi- and Ni-containing alloy, the load characteristics attributable to the solid phase diffusion of Li ions are improved, for example, the load characteristics during discharging are improved. Thus, according to the battery 2000 of the present embodiment, the charge-discharge characteristics can be improved, in particular, the initial efficiency can be improved. As described above, the battery 2000 of the present embodiment has a structure suitable for improving the charge-discharge characteristics.

Note that in the first electrode 101 illustrated in Fig. 3, the active material layer 106 is formed as a thin film on inner walls of the pores in the substrate 105, and the inside region of the active material layer 106 is substantially filled with the second solid electrolyte 107. As such, in this first electrode 101, the insides of the pores in the substrate 105 may be substantially filled with the active material layer 106 and the second solid electrolyte 107, and the porosity may be low. Even when the first electrode 101 has this structure, the boundary between the substrate 105 and the active material layer 106 can be clearly distinguished, and it can be said that, in the first electrode 101, the substrate 105 includes a porous body and the active material layer 106 is formed on a surface of the substrate 105. The active material layer 106 may be formed on some parts of inner walls of multiple pores or may be formed on substantially all parts of inner walls of the pores.

The battery 1000 and the battery 2000 are, for example, lithium secondary batteries. Hereinafter, an example in which the metal ions that are intercalated and deintercalated by the active material layer 106 of the first electrode 101 and the second electrode 103 during charging and discharging of the battery 1000 and the battery 2000 are lithium ions is described.

The substrate 105 includes, as mentioned above, a porous body. In this description, a porous body refers to a structure that has multiple pores that include open pores that open to the outside. Examples of the porous body in this description include a mesh and a porous structure. A porous structure is constituted by a porous material having multiple pores, and the size of pores is not particularly limited. An example of the porous structure is a foam. The porous structure may be a three-dimensional network structure in which the pores are in communication with each other. In this description, the "pores" refer to those with insides filled with an active material layer or free of an active material layer. In other words, those pores that have insides filled with an active material layer are also considered "pores".

The substrate 105 has, for example, electrical conductivity. The substrate 105 may include a conductive material, such as a metal, or a porous body (for example, a resin foam) made of a non-conductive material, such as a resin, having a surface covered with a conductive film made of a conductive material. The substrate 105 may be, for example, a metal mesh or a porous metal. The substrate 105 can function as a current collector for the first electrode 101. In other words, when there is a first current collector 100, for example, the first current collector 100 and the substrate 105 function as the current collectors for the first electrode 101. When there is no first current collector 100, for example, the substrate 105 functions as a current collector for the first electrode 101.

The substrate 105 may contain, for example, Ni. The substrate 105 may be, for example, a nickel mesh or a porous nickel.

As mentioned above, the active material layer 106 contains, for example, BiNi as the Bi- and Ni-containing alloy. The active material layer 106 may contain BiNi as a main component. Here, the phrase "the active material layer 106 contains BiNi as a main component" is defined as that "the BiNi content in the active material layer 106 is greater than or equal to 50 mass%". The BiNi content in the active material layer 106 can be determined by, for example, performing elemental analysis by energy dispersive X-ray spectroscopy (EDX) to confirm the presence of Bi and Ni in the active material layer 106 and then performing Rietveld analysis on the X-ray diffraction results of the active material layer 106 to calculate the ratios of the compounds contained therein.

According to the aforementioned features, improved charge-discharge characteristics are obtained.

The active material layer 106 that contains BiNi as a main component may be constituted by a thin film of BiNi (hereinafter, referred to as a "BiNi thin film").

The active material layer 106 constituted by a BiNi thin film can be produced by, for example, electroplating. A method for producing a first electrode 101 by producing the active material layer 106 by electroplating is, for example, as follows.

First, a substrate for electroplating is prepared. A porous body that can constitute the substrate 105 when the first electrode 101 is formed is used as the substrate for electroplating. Examples of the substrate for electroplating include a metal mesh and a porous metal. For example, a nickel mesh or porous nickel may be used as the substrate for electroplating. Since the porous body used for the substrate for electroplating may be any as long as the porous body can serve as the substrate 105 upon formation of the first electrode after the processes such as electroplating and pressing, the structure thereof is not particularly limited and can be selected as appropriate according to the structure of the first electrode 101 to be formed. In one example, a porous body used for the substrate for electroplating may have, for example, a specific surface area greater than or equal to 0.014 m²/cm³ and less than or equal to 0.036 m²/cm³.

For example, a nickel mesh is prepared as the substrate for electroplating. After the nickel mesh is preliminarily degreased with an organic solvent, the nickel mesh is immersed in an acidic solvent to perform degreasing and activate the nickel mesh surface. The activated nickel mesh is connected to a power supply so that current can be applied. The nickel mesh connected to the power supply is immersed in a bismuth plating bath. For example, an organic acid bath containing Bi³⁺ ions and an organic acid is used as the bismuth plating bath. Next, electrical current is applied to the nickel mesh while the current density and application time are controlled so as to electroplate the nickel mesh surface with Bi. After electroplating, the nickel mesh is recovered from the plating bath, the mask is removed, and the nickel mesh is washed with pure water and dried. Through these steps, a Bi plating layer is formed on the surface of the nickel mesh. Here, the bismuth plating bath used in preparing the Bi plating layer is not particularly limited, and can be appropriately selected from known bismuth plating baths that can deposit elemental Bi thin films. For the bismuth plating bath, an organic sulfonic acid bath, a gluconic acid and ethylenediaminetetraacetic acid (EDTA) bath, or a citric acid and EDTA bath can be used as the organic acid bath. Furthermore, for example, a sulfuric acid bath can be used as the bismuth plating bath. Furthermore, additives may be added to the bismuth plating bath.

A Bi plating layer can be obtained as described above even when, for example, a porous nickel is used as the substrate for electroplating.

Table 1 indicates the Bi plating mass produced by the aforementioned method when a nickel foil, a nickel mesh, and a porous nickel were used as substrates for electroplating. Note that when a nickel foil is used as a substrate for electroplating, after the nickel foil is preliminarily degreased with an organic solvent, one surface of the nickel foil is masked, and the nickel foil is immersed in an acidic solvent to perform degreasing and to activate the nickel foil surface. Next, the nickel foil is immersed in a bismuth plating bath to electroplate the un-masked surface of the nickel foil with Bi.

**[Table 1]**

| | Nickel foil | Nickel mesh | Porous nickel |
|---|---|---|---|
| Size (length × width | 10 cm × 10 cm | 10 cm × 10 cm | 10 cm × 10 cm |
| Thickness | 10 µm | 50 µm | 1600 µm |
| Plating mass | 0.512 g | 1.032 g | 0.526 g |
| Note | Ni/foil produced by The Nilaco Corporation NI-313173 | Ni/mesh produced by The Nilaco Corporation NI-318200 | Ni/porous body produced by The Nilaco Corporation NI-318161 |

Next, the nickel mesh and the Bi plating layer on the nickel mesh are heated. Due to this heat treatment, solid-phase diffusion of Ni from the nickel mesh, which is a substrate, to the Bi plating layer occurs, and thus an active material layer constituted by a BiNi thin film can be prepared. Here, solid-phase diffusion of Ni from the nickel mesh to the Bi plating layer occurs by heat-treating a sample, which is obtained by electroplating a nickel mesh with Bi, at a temperature higher than or equal to 250°C in a non-oxidizing atmosphere for 30 minutes or longer but shorter than 100 hours, for example, and thus an active material layer constituted by a BiNi thin film can be prepared.

The aforementioned sample prepared by electroplating the nickel mesh with Bi is heat-treated at a temperature of 400°C for 60 hours in an argon atmosphere to form an active material layer constituted by a BiNi thin film.

The active material layer constituted by a BiNi thin film on the nickel mesh was subjected to a surface structural analysis by surface X-ray diffractometry.

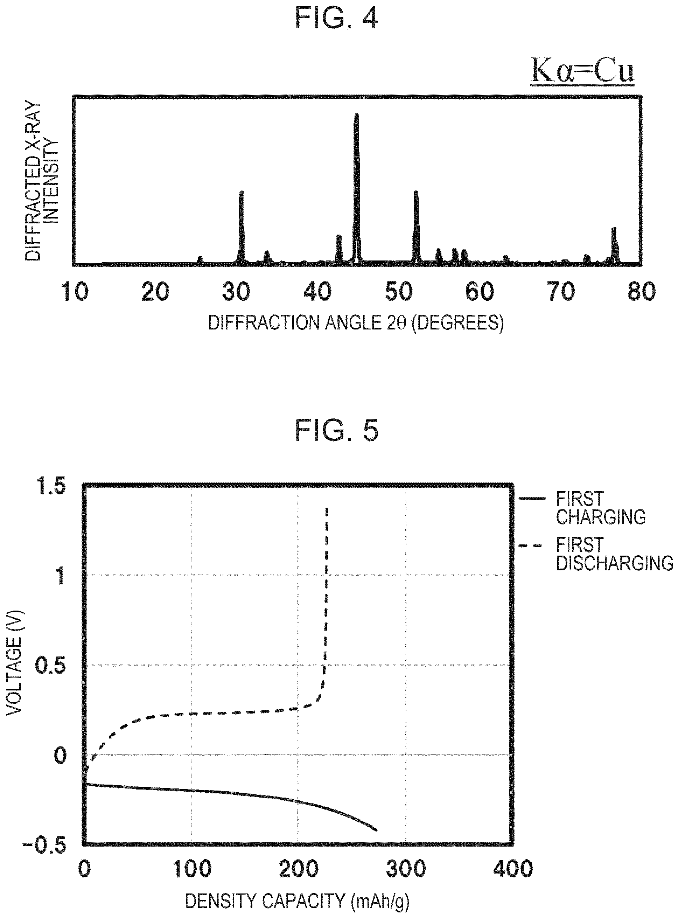

Fig. 4 is a graph indicating one example of an X-ray diffraction pattern of an active material layer constituted by a BiNi thin film prepared on a nickel mesh. The X-ray diffraction pattern was acquired from the surface of the active material layer, that is, in the thickness direction of the active material layer, by a θ-2θ method with Cu-Kα radiation having wavelengths of 1.5405 Å and 1.5444 Å as X-rays by using an X-ray diffractometer (MiNi Flex produced by RIGAKU Corporation). The X-ray diffraction pattern illustrated in Fig. 4 identified phases of BiNi having a crystal structure of the space group C2/m and Ni contained in the nickel mesh serving as a substrate and in the active material layer.

It is possible to synthesize BiNi of the space group C2/m by performing electroplating and heat treatment even for BiNi formed by using a porous body, such as a porous nickel, as a substrate. In other words, in the battery 1000 of the present embodiment, the active material layer 106 containing BiNi contained in the first electrode 101 may be a heat-treated plating layer prepared as described above, for example. Furthermore, in the battery 1000 of the present embodiment, BiNi contained in the active material layer 106 of the first electrode 101 has a crystal structure of the space group C2/m.

When producing a first electrode 101 of a battery 2000, that is, a first electrode 101 that has a second solid electrolyte 107, a BiNi-containing active material layer 106 is formed on a surface of a substrate 105 as described above and then a second solid electrolyte 107 is formed in contact with the active material layer 106. The second solid electrolyte 107 may be formed by any method as long as the second solid electrolyte 107 is in contact with the active material layer 106. For example, the second solid electrolyte 107 may be formed by a liquid phase method. Alternatively, the second solid electrolyte 107 may be formed by filling the inside region of the active material layer 106, which is formed as a thin film on inner walls of the pores in the substrate 105, with a powdery solid electrolyte. When the second solid electrolyte 107 is formed by a liquid phase method, for example, a solution in which a raw material for the second solid electrolyte 107 is dispersed or dissolved in a solvent is prepared, the substrate 105 with the active material layer 106 formed thereon is immersed in the solution, and then the solvent is removed to form the second solid electrolyte 107. Heat treatment may be performed after the removal of the solvent.

In the description below, the features of the battery 1000 and the battery 2000 of the present embodiment are described in more detail by using, as one example, the case in which the first electrode 101 is a negative electrode and the second electrode 103 is a positive electrode. Hereinafter, the battery 1000 and the battery 2000 of the present embodiment are simply referred to as a battery of the present embodiment.

### [First electrode]

As mentioned above, the first electrode 101 includes a substrate 105 including a porous body, and an active material layer 106 disposed on a surface of the substrate 105. The first electrode 101 may further include a second solid electrolyte 107 in contact with the active material layer 106. The features of the substrate 105, the active material layer 106, and the second solid electrolyte 107 are as described above but are described below in more detail.

The first electrode 101 functions as a negative electrode, for example. Thus, the active material layer 106 contains a negative electrode active material that has properties of intercalating and deintercalating lithium ions. The active material layer 106 contains a Bi- and Ni-containing alloy, and the Bi- and Ni-containing alloy serves as a negative electrode active material. The active material layer 106 contains, for example, BiNi as an active material. BiNi in the active material layer 106 has a crystal structure of the space group C2/m.

Bi is a metal element that alloys with lithium. Meanwhile, since Ni does not alloy with lithium, a Ni-containing alloy puts less load onto the crystal structure of the negative electrode active material during intercalation and deintercalation of lithium atoms associated with charging and discharging, and presumably thus the decrease in capacity retention ratio of the battery is reduced. When BiNi functions as a negative electrode active material, Bi alloys with lithium during charging, and lithium is intercalated as a result. In other words, in the active material layer 106, a lithium bismuth alloy is generated during charging of the battery of the present embodiment. The lithium bismuth alloy generated contains, for example, at least one selected from the group consisting of LiBi and Li₃Bi. In other words, during charging of the battery of the present embodiment, the active material layer 106 contains, for example, at least one selected from the group consisting of LiBi and Li₃Bi. During discharging of the battery of the present embodiment, the lithium bismuth alloy deintercalates lithium and returns to BiNi.

BiNi serving as a negative electrode active material undergoes the following reactions, for example, during charging and discharging of the battery of the present embodiment. Note that the examples of the reactions below are the examples in which the lithium bismuth alloy generated during charging is Li₃Bi.

Charging: BiNi + 3Li⁺ + 3e⁻ → Li₃Bi + Ni

Discharging: Li₃Bi + Ni → BiNi + 3Li⁺ + 3e⁻

The active material layer 106 may contain substantially only BiNi as the active material. In such a case, the battery of the present embodiment can have an improved capacity and improved cycle characteristics. Here, the "active material layer 106 contains substantially only BiNi as the active material" means, for example, that the amount of the active materials other than BiNi is less than or equal to 1 mass% of the active materials contained in the active material layer 106. The active material layer 106 may contain only BiNi as the active material.

The active material layer 106 may be free of an electrolyte. For example, the active material layer 106 may be a layer composed of nickel and BiNi and/or a lithium bismuth alloy generated during charging. The electrolyte referred here is a liquid or solid electrolyte that has lithium-ion conductivity.

The active material layer 106 may be disposed in direct contact with the surface of the substrate 105. When the battery of the present embodiment further includes a first current collector 100, the substrate 105 may be disposed in contact with the first current collector 100.

The active material layer 106 may have a thin film shape.

The active material layer 106 may be a heat-treated plating layer. The active material layer 106 may be a heat-treated plating layer disposed in direct contact with the surface of the substrate 105. In other words, as described above, the active material layer 106 may be a layer formed by heat-treating a Bi plating layer formed on a surface of a Ni-containing substrate 105.

When the active material layer 106 is a heat-treated plating layer disposed in direct contact with the surface of the substrate 105, the active material layer 106 firmly adheres to the substrate 105. As a result, degradation of the current collecting properties of the first electrode 101 caused by repeated expansion and contraction of the active material layer 106 can be further reduced. Thus, the battery of the present embodiment exhibits further improved charge-discharge characteristics. Furthermore, when the active material layer 106 is a heat-treated plating layer, the active material layer 106 contains a high concentration of Bi, which alloys with lithium, and thus a further larger capacity can be realized.

The active material layer 106 may contain materials other than the Bi- and Ni-containing alloy.

The active material layer 106 may further contain a conductive material.

Examples of the conductive material include carbon materials, metals, inorganic compounds, and conductive polymers. Examples of the carbon materials include graphite, acetylene black, carbon black, Ketjen black, carbon whiskers, needle coke, and carbon fibers. Examples of the graphite include natural graphite and artificial graphite. Examples of the natural graphite include vein graphite and flake graphite. Examples of the metals include copper, nickel, aluminum, silver, and gold. Examples of the inorganic compound include tungsten carbide, titanium carbide, tantalum carbide, molybdenum carbide, titanium boride, and titanium nitride. These materials may be used alone or as a mixture of two or more.

The active material layer 106 may further contain a binder.

Examples of the binder include fluororesins, thermoplastic resins, ethylene propylene diene monomer (EPDM) rubber, sulfonated EPDM rubber, and natural butyl rubber (NBR). Examples of the fluororesins include polytetrafluoroethylene (PTFE), polyvinylidene fluoride (PVdF), and fluororubber. Examples of the thermoplastic resins include polypropylene and polyethylene. These materials may be used alone or as a mixture of two or more.

The thickness of the active material layer 106 is not particularly limited and may be, for example, greater than or equal to 0.1 µm and less than or equal to 100 µm.

The material for the substrate 105 is, for example, an elemental metal or an alloy. More specifically, an elemental metal or an alloy that contains at least one selected from the group consisting of copper, chromium, nickel, titanium, platinum, gold, aluminum, tungsten, iron, and molybdenum may be used. The substrate 105 may be composed of stainless steel.

The substrate 105 may contain nickel (Ni).

The structure of the substrate 105 is as mentioned above. The substrate 105 may be considered a current collector or a part of a current collector of the first electrode 101.

The second solid electrolyte 107 may contain a second halide solid electrolyte. The second halide solid electrolyte is substantially free of sulfur.

In this description, a halide solid electrolyte refers to a solid electrolyte containing a halogen element. The halide solid electrolyte may contain oxygen in addition to the halogen element. The halide solid electrolyte does not contain sulfur (S).

The second halide solid electrolyte contains Li, M, and X, where M contains at least one selected from the group consisting of metalloids and metal elements other than Li, and X is at least one selected from the group consisting of F, Cl, Br, and I.

The second solid electrolyte layer 107 may essentially consist of Li, M, and X. "The second solid electrolyte layer 107 essentially consists of Li, M, and X" means that, in the second solid electrolyte 107, the ratio (in other words, the molar fraction) of the total amount of Li, M, and X to the total amount of all elements constituting the second solid electrolyte 107 is greater than or equal to 90%. In one example, this ratio (in other words, the molar fraction) may be greater than or equal to 95%. The second solid electrolyte layer may consist of Li, M, and X.

The second halide solid electrolyte may be, for example, a material represented by formula (1) below:

Formula (1): Li_{α}M_{β}X_{γ}

Here, α, β, and γ are each a value greater than 0, M is at least one selected from the group consisting of metalloids and metal elements other than Li, and X is at least one selected from the group consisting of F, Cl, Br, and I.

The "metalloids" are B, Si, Ge, As, Sb, and Te.

The "metal elements" are all group 1 to 12 elements other than hydrogen in the periodic table and all group 13 to 16 elements other than B, Si, Ge, As, Sb, Te, C, N, P, O, S, and Se. In other words, these are a group of elements that can form cations in forming an inorganic compound with a halogen element.

In order to increase the ion conductivity, M may contain at least one element selected from the group consisting of group 1 elements, group 2 elements, group 3 elements, group 4 elements, and lanthanoid elements.

Examples of the group 1 elements are Na, K, Rb, and Cs. Examples of the group 2 elements are Mg, Ca, Sr, and Ba. Examples of the group 3 elements are Sc and Y. Examples of the group 4 elements are Ti, Zr, and Hf. Examples of the lanthanoid elements are La, Ce, Pr, Nd, Sm, Eu, Gd, Tb, Dy, Ho, Er, Tm, Yb, and Lu.

In order to increase the ion conductivity, M may contain a group 5 element, a group 12 element, a group 13 element, or a group 14 element.

Examples of the group 5 elements are Nb and Ta. An example of the group 12 elements is Zn. Examples of the group 13 elements are Al, Ga, and In. An example of the group 14 is Sn.

In order to further increase the ion conductivity, M may contain at least one element selected from the group consisting of Na, K, Mg, Ca, Sr, Ba, Sc, Y, Zr, Hf, La, Ce, Pr, Nd, Sm, Eu, Gd, Tb, Dy, Ho, Er, Tm, Yb, and Lu.

In order to further increase the ion conductivity, M may contain at least one element selected from the group consisting of Mg, Ca, Sr, Y, Sm, Gd, Dy, and Hf.

In order to further increase the ion conductivity, M may contain Y.

In order to further increase the ion conductivity, X may contain at least one selected from the group consisting of Br, Cl, and I.

In order to further increase the ion conductivity, X may contain Br, Cl, and I.

In formula (1), M may contain Y and X may contain Cl and Br. The second halide solid electrolyte may be, for example, at least one selected from the group consisting of Li₃YBr₃Cl₃ and Li₃YBr₂Cl₄. In other words, the second solid electrolyte 107 may contain at least one selected from the group consisting of Li₃YBr₃Cl₃ and Li₃YBr₂Cl₄.

Examples of the second halide solid electrolyte that can be used include Li₃(Ca,Y,Gd)X₆, Li₂MgX₄, Li₂FeX₄, Li(Al,Ga,In)X₄, Li₃(Al,Ga,In)X₆, and LiI. Here, in these solid electrolytes, the element X is at least one selected from the group consisting of F, Cl, Br, and I. In the present disclosure, when the element in a formula is indicated as "(Al,Ga,In)", this means at least one element selected from the group of elements in the parentheses. In other words, "(Al,Ga,In)" has the same meaning as the "at least one selected from the group consisting of Al, Ga, and In". The same applies to other elements.

Another example of the second halide solid electrolyte is a compound represented by LiₐMe_{b}Y_{c}X₆. Here, a + mb + 3c = 6 and c > 0. Me is at least one selected from the group consisting of metalloids and metal elements other than Li and Y. Here, m represents the valence of Me. The "metalloids" and "metal elements" are as described above.

In order to increase the ion conductivity of the second halide solid electrolyte material, Me may be at least one selected from the group consisting of Mg, Ca, Sr, Ba, Zn, Sc, Al, Ga, Bi, Zr, Hf, Ti, Sn, Ta, and Nb. The halide solid electrolyte may be Li₃YCl₆, Li₃YBr₆, or Li₃YBrₚCl₆₋ₚ. Here, p satisfies 0 < p < 6.

The second solid electrolyte 107 may contain a second sulfide solid electrolyte.

The sulfide solid electrolyte refers to a solid electrolyte containing sulfur (S). The sulfide solid electrolyte may contain a halogen element in addition to sulfur.

Examples of the second sulfide solid electrolyte that can be used include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

The second solid electrolyte 107 may contain an oxide solid electrolyte, a polymeric solid electrolyte, or a complex hydride solid electrolyte.

The thickness of the first electrode 101 may be greater than or equal to 10 µm and less than or equal to 2000 µm. In other words, the thickness of the entire substrate 105 including a porous body having a surface with the active material layer 106 formed thereon, may be greater than or equal to 10 µm and less than or equal to 2000 µm. When the first electrode 101 has such a thickness, the battery can operate at high output.

### [First current collector]

In the battery of the present embodiment, the first current collector 100 is optional. The first current collector 100 is, for example, in contact with the first electrode 101. The first current collector 100 is, for example, in contact with the substrate 105 of the first electrode 101. Electricity can be highly efficiently obtained from the battery of the present embodiment by including the first current collector 100.

The material for the first current collector 100 is, for example, an elemental metal or an alloy. More specifically, an elemental metal or an alloy that contains at least one selected from the group consisting of copper, chromium, nickel, titanium, platinum, gold, aluminum, tungsten, iron, and molybdenum may be used. The first current collector 100 may be composed of stainless steel.

The first current collector 100 may contain nickel (Ni).

The first current collector 100 may have a plate shape or a foil shape. From the viewpoint of ease of securing high conductivity, the first current collector 100 may be a metal foil. The thickness of the first current collector 100 may be, for example, greater than or equal to 5 µm and less than or equal to 20 µm.

The first current collector 100 may be a multilayer film.

### [Solid electrolyte layer]

The first solid electrolyte contained in the solid electrolyte layer 102 may be a halide solid electrolyte (in other words, a first halide solid electrolyte), a sulfide solid electrolyte (in other words, a first sulfide solid electrolyte), an oxide solid electrolyte, a polymeric solid electrolyte, or a complex hydride solid electrolyte.

The first solid electrolyte may contain a first halide solid electrolyte. Examples of the first halide solid electrolyte are the same as the examples of the second halide solid electrolyte described above.

The first solid electrolyte may contain a first sulfide solid electrolyte. Examples of the first sulfide solid electrolyte are the same as the examples of the second sulfide solid electrolyte described above.

Examples of the oxide solid electrolyte include NASICON solid electrolytes such as LiTi₂(PO₄)₃ and element substitution products thereof, perovskite solid electrolytes based on (LaLi)TiO₃, LISICON solid electrolytes such as Li₁₄ZnGe₄O₁₆, Li₄SiO₄, LiGeO₄, and element substitution products thereof, garnet solid electrolytes such as Li₇La₃Zr₂O₁₂ and element substitution products thereof, Li₃PO₄ and N substitution products thereof, and glass or glass ceramic based on a Li-B-O compound such as LiBO₂ or Li₃BO₃ doped with Li₂SO₄, Li₂CO₃, or the like.

The polymeric solid electrolyte can be, for example, a compound between a polymer compound and a lithium salt. The polymer compound may have an ethylene oxide structure. The polymer compound having an ethylene oxide structure can contain a large amount of lithium salts. Thus, the ion conductivity can be further increased. Examples of the lithium salt that can be used include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from among the aforementioned lithium salts can be used alone. Alternatively, a mixture of two or more lithium salts selected from among the aforementioned lithium salts can be used.

Examples of the complex hydride solid electrolyte that can be used include LiBH₄-LiI and LiBH₄-P₂S₅.

The solid electrolyte layer 102 may consist essentially of a halide solid electrolyte. In the present description, "consist essentially of" intends to allow inclusion of impurities at a content less than 0.1%. The solid electrolyte layer 102 may consist of a halide solid electrolyte.

The aforementioned features can increase the ion conductivity of the solid electrolyte layer 102. As a result, the decrease in energy density of the battery can be reduced.

The solid electrolyte layer 102 may further contain a binder. The same materials as the materials that can be used in the active material layer 106 can be used as the binder.

The solid electrolyte layer 102 may have a thickness greater than or equal to 1 µm and less than or equal to 500 µm. When the solid electrolyte layer 102 has a thickness greater than or equal to 1 µm, short circuiting between the first electrode 101 and the second electrode 103 rarely occurs. When the solid electrolyte layer 102 has a thickness less than or equal to 500 µm, the battery can operate at high output.

The shape of the solid electrolyte is not particularly limited. When the solid electrolyte is a powder material, the shape thereof may be, for example, a needle shape, a spherical shape, or an oval shape. For example, the solid electrolyte may have a particle shape.

When the solid electrolyte has a particle shape (for example, a spherical shape), the median diameter of the solid electrolyte may be less than or equal to 100 µm or less than or equal to 10 µm.

In the present disclosure, the "median diameter" refers to the particle diameter at which the accumulated volume in a volume-based particle size distribution is 50%. The volume-based particle size distribution is, for example, measured by a laser diffraction measuring instrument or an image analyzer.

The solid electrolyte contained in the solid electrolyte layer 102 can be prepared by the following method.

Raw material powders are prepared so that a desired composition is achieved. Examples of the raw material powders include an oxide, a hydroxide, a halide, and an acid halide.

In one example where the desired composition is Li₃YBr₄Cl₂, LiBr, YCl, and YBr are mixed at a molar ratio of about 3:0.66:0.33. In order to cancel out compositional changes that could happen in the synthetic process, the raw material powder may be mixed at a preliminarily adjusted molar ratio.

The raw material powders are mechanochemically reacted with one another in a mixer such as a planetary ball mill (in other words, by a mechanochemical milling method) so as to obtain a reaction product. The reaction product may be heat-treated in vacuum or in an inert atmosphere. Alternatively, a mixture of raw material powders may be heat-treated in vacuum or in an inert atmosphere to obtain a reaction product. The heat treatment is desirably performed at a temperature higher than or equal to 100°C and lower than or equal to 300°C for 1 hour or longer. In order to suppress compositional changes during heat treatment, the raw material powders are desirably heat-treated in a sealed container such as a quartz tube.

A solid electrolyte of the solid electrolyte layer 102 is obtained by the method described above.

### [Second electrode]

The second electrode 103 functions as, for example, a positive electrode. The second electrode 103 contains a material that can intercalate and deintercalate metal ions such as lithium ions. This material is, for example, a positive electrode active material.

The second electrode 103 contains a positive electrode active material. When the battery of the present embodiment includes a second current collector 104, the second electrode 103 is disposed between, for example, the second current collector 104 and the solid electrolyte layer 102.

The second electrode 103 may be disposed on a surface of the second current collector 104 to be in direct contact with the second current collector 104.

Examples of the positive electrode active material that can be used include lithium-containing transition metal oxides, transition metal fluorides, polyanion materials, fluorinated polyanion materials, transition metal sulfides, transition metal oxysulfides, and transition metal oxynitrides. Examples of the lithium-containing transition metal oxides include LiNi_{1-x-y}CoₓAl_{y}O₂ ((x + y) < 1), LiNi_{1-x-y}CoₓMn_{y}O₂ ((x + y) < 1), and LiCoO₂. In particular, when a lithium-containing transition metal oxide is used as the positive electrode active material, the production cost of the electrode can be reduced, and the average discharge voltage of the battery can be increased. For example, the positive electrode active material may contain Li(Ni,Co,Mn)O₂.

The second electrode 103 may contain a solid electrolyte. The solid electrolytes that are described as examples of the material constituting the solid electrolyte layer 102 may be used as this solid electrolyte.

The positive electrode active material may have a median diameter greater than or equal to 0.1 µm and less than or equal to 100 µm. When the positive electrode active material has a median diameter greater than or equal to 0.1 µm, the positive electrode active material and the solid electrolyte can create a good dispersion state. As a result, the charge-discharge characteristics of the battery are improved. When the positive electrode active material has a median diameter less than or equal to 100 µm, the lithium diffusion speed is improved. As a result, the battery can operate at high output.

The positive electrode active material may have a median diameter greater than that of the solid electrolyte. In this manner, the positive electrode active material and the solid electrolyte can form an excellent dispersion state.

From the viewpoint of the energy density and output of the battery, in the second electrode 103, the ratio of the volume of the positive electrode active material to the total of the volume of the positive electrode active material and the volume of the solid electrolyte may be greater than or equal to 0.30 and less than or equal to 0.95.

In order to prevent the solid electrolyte from reacting with the positive electrode active material, a coating layer may be formed on the surface of the positive electrode active material. In this manner, the increase in reaction overvoltage of the battery can be reduced. Examples of the coating material contained in the coating layer include sulfide solid electrolytes, oxide solid electrolytes, and halide solid electrolytes.

The thickness of the second electrode 103 may be greater than or equal to 10 µm and less than or equal to 500 µm. When the thickness of the second electrode 103 is greater than or equal to 10 µm, a sufficient battery energy density can be secured. When the thickness of the second electrode 103 is less than or equal to 500 µm, the battery can operate at high output.

The second electrode 103 may contain a conductive material to increase electron conductivity.

The second electrode 103 may contain a binder.

The same materials as the materials that can be used in the active material layer 106 can be used as the conductive material and the binder.

For the purpose of facilitating lithium-ion exchange and improving the output characteristics of the battery, the second electrode 103 may contain a nonaqueous electrolyte solution, a gel electrolyte, or an ionic liquid.

The nonaqueous electrolyte solution contains a nonaqueous solvent and a lithium salt dissolved in the nonaqueous solvent. Examples of the non-aqueous solvent include cyclic carbonate solvents, linear carbonate solvents, cyclic ether solvents, linear ether solvents, cyclic ester solvents, linear ester solvents, and fluorine solvents. Examples of the cyclic carbonate solvents include ethylene carbonate, propylene carbonate, and butylene carbonate. Examples of the linear carbonate solvents include dimethyl carbonate, ethyl methyl carbonate, and diethyl carbonate. Examples of the cyclic ether solvents include tetrahydrofuran, 1,4-dioxane, and 1,3-dioxolane. Examples of the linear ether solvents include 1,2-dimethoxyethane and 1,2-diethoxyethane. An example of the cyclic ester solvents is γ-butyrolactone. An example of the linear ester solvents is methyl acetate. Examples of the fluorine solvents include fluoroethylene carbonate, methyl fluoropropionate, fluorobenzene, fluoroethyl methyl carbonate, and fluorodimethylene carbonate. One non-aqueous solvent selected from these may be used alone. Alternatively, a mixture of two or more non-aqueous solvents selected from among these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CE₃)₃. One lithium salt selected from these may be used alone. Alternatively, a mixture of two or more lithium salts selected from among these may be used. The lithium salt concentration is, for example, greater than or equal to 0.5 mol/L and less than or equal to 2 mol/L.

A polymer material impregnated with a non-aqueous electrolyte solution can be used as the gel electrolyte. Examples of the polymer material include polyethylene oxide, polyacrylonitrile, polyvinylidene fluoride, polymethyl methacrylate, and polymers having ethylene oxide bonds.

Examples of the cations contained in the ionic liquid include: (i) aliphatic linear quaternary salts such as tetraalkylammonium and tetraalkylphosphonium; (ii) aliphatic cyclic ammoniums such as pyrrolidiniums, morpholiniums, imidazoliniums, tetrahydropyrimidiniums, piperaziniums, and piperidiniums; and (iii) nitrogen-containing heterocyclic aromatic cations such as pyridiniums and imidazoliums.

Examples of the anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

Although the structure example in which the first electrode 101 is a negative electrode and the second electrode 103 is a positive electrode has been described heretofore, the first electrode 101 may be a positive electrode and the second electrode 103 may be a negative electrode.

When the first electrode 101 is a positive electrode and the second electrode 103 is a negative electrode, the active material layer 106 is a positive electrode active material layer. In other words, Bi contained in the active material layer 106 functions as a positive electrode active material. In such a case, the second electrode 103 serving as a negative electrode is made of, for example, lithium metal.

### [Second current collector]

In the battery of the present embodiment, the second current collector 104 is optional. The second current collector 104 is, for example, in contact with the second electrode 103. Electricity can be highly efficiently obtained from the battery of the present embodiment by including the second current collector 104.

The material for the second current collector 104 is, for example, an elemental metal or an alloy. More specifically, an elemental metal or an alloy that contains at least one selected from the group consisting of copper, chromium, nickel, titanium, platinum, gold, aluminum, tungsten, iron, and molybdenum may be used. The second current collector 104 may be composed of stainless steel.

The second current collector 104 may contain nickel (Ni).

The second current collector 104 may have a plate shape or a foil shape. From the viewpoint of ease of securing high conductivity, the second current collector 104 may be a metal foil. The thickness of the second current collector 104 may be, for example, greater than or equal to 5 µm and less than or equal to 20 µm.

The second current collector 104 may be a multilayer film.

The battery of the present embodiment includes the first electrode 101, the solid electrolyte layer 102, and the second electrode 103 as the basic features, and is enclosed in a sealed container so that air and moisture would not mix in. Examples of the shape of the battery of the present embodiment include a coin shape, a cylinder shape, a prism shape, a sheet shape, a button shape, a flat shape, and a multilayer shape.

### EXAMPLES

In the description below, the details of the present disclosure are disclosed through Examples and Reference Examples. Examples described below are merely illustrative, and do not limit the present disclosure.

### (Example 1)

### <Preparation of first electrode>

After a nickel mesh (10 cm × 10 cm, thickness: 50 µm, "NI-318200" produced by The Nilaco Corporation) was preliminarily degreased with an organic solvent as a preliminary treatment, the nickel mesh was immersed in an acidic solvent to perform degreasing and activate the nickel mesh surface. To 1.0 mol/L of methanesulfonic acid, bismuth methanesulfonate serving as a soluble bismuth salt was added so that the Bi³⁺ ion concentration was 0.18 mol/L so as to prepare a plating bath. The activated nickel mesh was connected to a power supply so that current could be applied, and then immersed in the plating bath. Next, the nickel mesh surface was electroplated with Bi by controlling the current density to 2A/dm² so that the thickness of the plating layer was about 5 µm. After the electroplating, the nickel mesh was recovered from the acidic bath, washed with pure water, and dried. The Bi plating mass on the nickel mesh was as indicated in Table 1.

Subsequently, the nickel mesh electroplated with Bi was heat-treated at 400°C for 60 hours in an argon atmosphere in an electric furnace. After the heat treatment, generation of BiNi was confirmed by X-ray diffractometry, and then the nickel mesh was punched out to a size of φ0.92 cm to obtain a first electrode. In other words, the first electrode of Example 1 had a structure in which an active material layer 106 composed of BiNi was formed on a substrate 105 made of a nickel mesh. The obtained active material layer 106 composed of BiNi was subjected to surface X-ray diffractometry. Fig. 4 is a graph indicating one example of an X-ray diffraction pattern of an active material layer constituted by a BiNi thin film prepared on a nickel mesh.

### <Preparation of solid electrolyte>

In an argon atmosphere having a dew point lower than or equal to -60°C (hereinafter referred to as a "dry argon atmosphere"), the raw material powders, LiBr, YCl₃, and YBr₃, were prepared at a molar ratio of LiBr:YCl₃:YBr₃ = 3:2/3:1/3. These raw material powders were crushed and mixed in a mortar into a mixed powder. The obtained mixture of the raw material powders was heat-treated in a dry argon atmosphere in an electric furnace at 500°C for 3 hours, as a result of which a heat-treated product was obtained. The obtained heat-treated product was crushed with a pestle in a mortar. As a result, a solid electrolyte having a composition represented by Li₃YBr₄Cl₂ was obtained.

### <Preparation of test cell>

In an insulating external cylinder having an inner diameter of 9.4 mm, a solid electrolyte Li₃YBr₄Cl₂ (80 mg) was stacked on the obtained first electrode serving as a working electrode, and then an indium-lithium alloy (molar ratio In:Li = 1:1) (200 mg) was stacked as a counter electrode to form a multilayer body. The indium-lithium alloy was prepared by pressing a small piece of a lithium foil onto an indium foil and diffusing lithium into indium. A pressure of 360 MPa was applied to the multilayer body to form a working electrode, a solid electrolyte layer, and a counter electrode. In the multilayer body, the thickness of the first electrode serving as a working electrode was 65 µm, the thickness of the solid electrolyte layer was 400 µm, and the thickness of the counter electrode was 15 µm.

Next, current collectors made from stainless steel were attached to the working electrode and the counter electrode, and current collecting leads were attached to the current collectors.

Lastly, the inside of the insulating external cylinder was shut out from the external atmosphere by using an insulating ferrule to seal the inside of the cylinder.

As a result, a test cell of Example 1 in which the working electrode was the electrode (that is, the first electrode) obtained by forming a BiNi active material layer on the nickel mesh and the counter electrode was made of a lithium-indium alloy was obtained. Here, the prepared test cell is a unipolar test cell that uses a working electrode and a counter electrode, and is used to test performance of one of the electrodes in a secondary battery. To be more specific, an electrode to be tested is used as the working electrode, and an active material in an amount sufficient for the reaction at the working electrode is used in the counter electrode. Since the present test cell was used to test the performance of the first electrode serving as a negative electrode, a large excess of a lithium-indium alloy was used as the counter electrode as with the usual practice. The negative electrode, performance of which was tested using such a test cell, can be used in a secondary battery when used together with a positive electrode that contains the positive electrode active material mentioned in the above-described embodiments, for example, a transition metal oxide containing Li.

### <Charge-discharge test>

A charge-discharge test of the prepared test cell was conducted under the following conditions. Assuming that the theoretical capacity of Bi is 384 mAh/g from the mass of electroplated Bi, constant-current charging was carried out to -0.42 V (0.2 V vs Li⁺/Li) at a rate of 0.5 IT on a Bi basis, and then discharging was carried out to 1.38 V (2.0 V vs Li⁺/Li). The charge-discharge test of the test cell was performed in a 25°C constant temperature oven. Fig. 5 is a graph showing the results of the charge-discharge test of the test cell of Example 1. On the BiNi active material (theoretical capacity: 300 mAh/g) basis, the initial charge capacity was 272.7 mAh/g. The discharge capacity thereafter was 227.1 mAh/g, and the initial efficiency was 83.3%. In addition, the initial charge capacity and the initial discharge capacity were, respectively, 90.9% and 75.7% of the theoretical capacities.

### (Example 2)

### <Preparation of first electrode>

After a porous nickel (10 cm × 10 cm, thickness: 1.6 mm, "NI-318161" produced by The Nilaco Corporation) was preliminarily degreased with an organic solvent as a preliminary treatment, the porous nickel was immersed in an acidic solvent to perform degreasing and activate the porous nickel surface. To 1.0 mol/L of methanesulfonic acid, bismuth methanesulfonate serving as a soluble bismuth salt was added so that the Bi³⁺ ion concentration was 0.18 mol/L so as to prepare a plating bath. The activated porous nickel was connected to a power supply so that current could be applied, and then immersed in the plating bath. Next, the porous nickel surface was electroplated with Bi by controlling the current density to 2 A/dm² so that the thickness of the plating layer was about 1 µm. After the electroplating, the porous nickel was recovered from the acidic bath, washed with pure water, and dried. The Bi plating mass on the porous nickel was as indicated in Table 1.

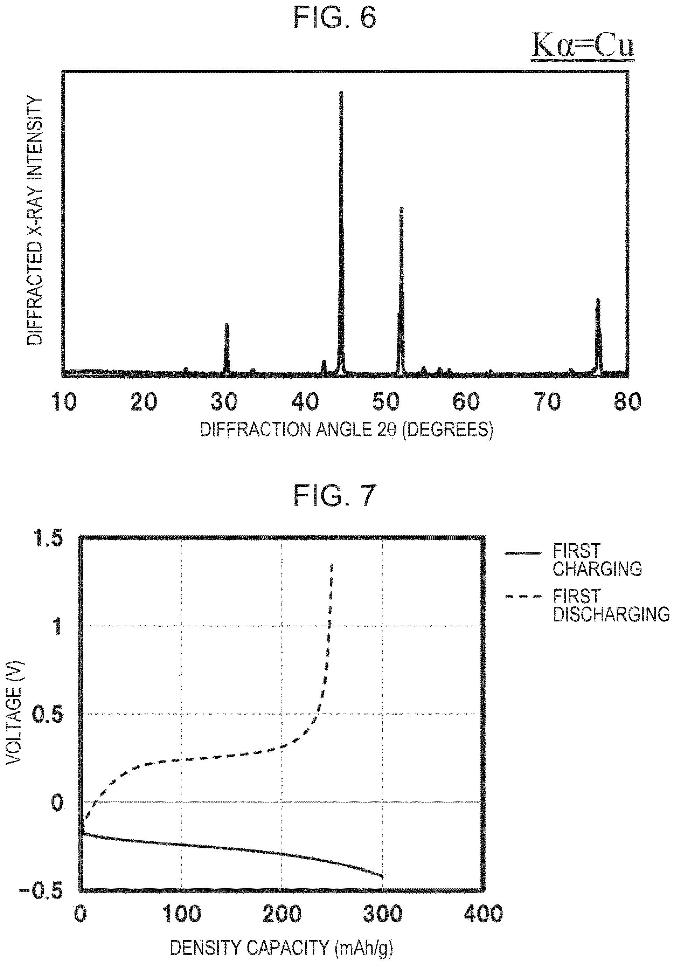

Subsequently, the porous nickel electroplated with Bi was heat-treated at 400°C for 60 hours in an argon atmosphere in an electric furnace. After the heat treatment, generation of BiNi was confirmed by X-ray diffractometry, and then the porous nickel was punched out to a size of φ0.92 cm to obtain a first electrode. In other words, the first electrode of Example 2 had a structure in which an active material layer 106 composed of BiNi was formed on a substrate 105 made of a porous nickel. The obtained active material layer 106 composed of BiNi was subjected to surface X-ray diffractometry. Fig. 6 is a graph indicating one example of an X-ray diffraction pattern of an active material layer constituted by a BiNi thin film prepared on a porous nickel.

### <Preparation of solid electrolyte>

A solid electrolyte having a composition represented by Li₃YBr₄Cl₂ was obtained as in Example 1.

### <Preparation of test cell>

A first electrode of Example 2 that had a structure in which an active material layer 106 composed of BiNi was formed on a substrate 105 made of a porous nickel was used as the first electrode. A test cell of Example 2 was obtained as with the test cell of Example 1 except for this point. The thickness of the first electrode serving as a working electrode was 400 µm, the thickness of the solid electrolyte layer was 400 µm, and the thickness of the counter electrode was 15 µm.

### <Charge-discharge test>

A charge-discharge test of the prepared test cell of Example 2 was conducted under the same conditions as in Example 1. Fig. 7 is a graph showing the results of the charge-discharge test of the test cell of Example 2. On the BiNi active material (theoretical capacity: 300 mAh/g) basis, the initial charge capacity was 300.0 mAh/g. The discharge capacity thereafter was 249.7 mAh/g, and the initial efficiency was 83.2%. In addition, the initial charge capacity and the initial discharge capacity were, respectively, 100.0% and 83.2% of the theoretical capacities.

### (Example 3)

### <Preparation of first electrode>

After a porous nickel (10 cm × 10 cm, thickness: 1.6 mm, "NI-318161" produced by The Nilaco Corporation) was preliminarily degreased with an organic solvent as a preliminary treatment, the porous nickel was immersed in an acidic solvent to perform degreasing and activate the porous nickel surface. To 1.0 mol/L of methanesulfonic acid, bismuth methanesulfonate serving as a soluble bismuth salt was added so that the Bi³⁺ ion concentration was 0.18 mol/L so as to prepare a plating bath. The activated porous nickel was connected to a power supply so that current could be applied, and then immersed in the plating bath. Next, the porous nickel surface was electroplated with Bi by controlling the current density to 2 A/dm² so that the thickness of the plating layer was about 1 µm. After the electroplating, the porous nickel was recovered from the acidic bath, washed with pure water, and dried.

Subsequently, the porous nickel electroplated with Bi was heat-treated at 400°C for 60 hours in an argon atmosphere in an electric furnace.

Subsequently, the heat-treated porous nickel was added to a 10 mass% solution prepared by dissolving and dispersing Li₃YBr₂Cl₄ in acetonitrile, and was allowed to be impregnated with the solution at a pressure of 0.5 atmosphere for 5 minutes. After the solution was dried at 80°C, heat-treatment was performed at 400°C for 1 hour in an argon atmosphere.

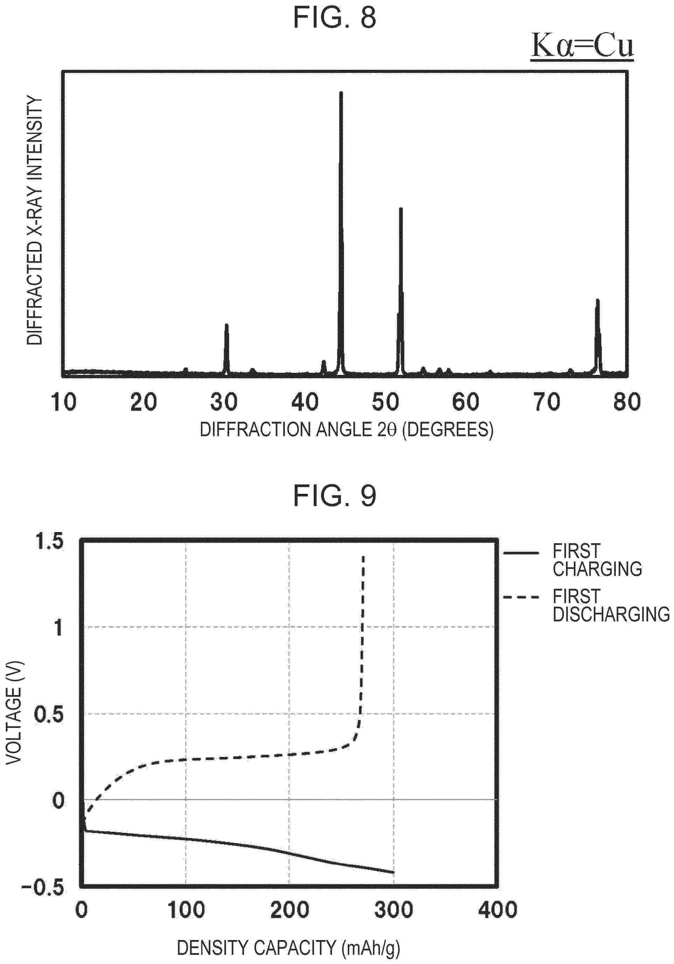

The obtained porous nickel was punched out into a φ0.92 cm piece to obtain a first electrode. In other words, the first electrode of Example 1 had a structure in which an active material layer composed of BiNi and a second solid electrolyte composed of Li₃YBr₂Cl₄ were formed on a substrate made of a porous nickel. Fig. 8 is a graph indicating one example of an X-ray diffraction pattern of an active material layer constituted by a BiNi thin film prepared on a porous nickel.

### <Preparation of solid electrolyte>

In an argon atmosphere having a dew point lower than or equal to -60°C (hereinafter referred to as a "dry argon atmosphere"), the raw material powders, LiBr, YCl₃, and YBr₃, were prepared at a molar ratio of LiBr:YCl₃:YBr₃ = 3:2/3:1/3. These raw material powders were crushed and mixed in a mortar into a mixed powder. The obtained mixture of the raw material powders was heat-treated in a dry argon atmosphere in an electric furnace at 500°C for 3 hours, as a result of which a heat-treated product was obtained. The obtained heat-treated product was crushed with a pestle in a mortar. As a result, a solid electrolyte having a composition represented by Li₃YBr₄Cl₂ was obtained.

### <Preparation of test cell>

In an insulating external cylinder having an inner diameter of 9.4 mm, a solid electrolyte Li₃YBr₄Cl₂ (80 mg) was stacked on the obtained first electrode serving as a working electrode, and then an indium-lithium alloy (molar ratio In:Li = 1: 1) (200 mg) was stacked as a counter electrode to form a multilayer body. The indium-lithium alloy was prepared by pressing a small piece of a lithium foil onto an indium foil and diffusing lithium into indium. A pressure of 360 MPa was applied to the multilayer body to form a working electrode, a solid electrolyte layer, and a counter electrode. In the multilayer body, the thickness of the first electrode serving as a working electrode was 600 µm, the thickness of the solid electrolyte layer was 400 µm, and the thickness of the counter electrode was 15 µm.

Next, current collectors made from stainless steel were attached to the working electrode and the counter electrode, and current collecting leads were attached to the current collectors.

Lastly, the inside of the insulating external cylinder was shut out from the external atmosphere by using an insulating ferrule to seal the inside of the cylinder.

As a result, a test cell of Example 3 in which the working electrode was an electrode (that is, the first electrode) obtained by forming a BiNi active material layer and a Li₃YBr₄Cl₂ second solid electrolyte on the porous nickel and the counter electrode is composed of a lithium-indium alloy was obtained. Here, the prepared test cell is a unipolar test cell that uses a working electrode and a counter electrode, and is used to test performance of one of the electrodes in a secondary battery. To be more specific, an electrode to be tested is used as the working electrode, and an active material in an amount sufficient for the reaction at the working electrode is used in the counter electrode. Since the present test cell was used to test the performance of the first electrode serving as a negative electrode, a large excess of a lithium-indium alloy was used as the counter electrode as with the usual practice. The negative electrode, performance of which was tested using such a test cell, can be used in a secondary battery when used together with a positive electrode that contains the positive electrode active material mentioned in the above-described embodiments, for example, a transition metal oxide containing Li.

### <Charge-discharge test>

A charge-discharge test of the prepared test cell was conducted under the following conditions. Assuming that the theoretical capacity of Bi is 384 mAh/g from the mass of electroplated Bi, constant-current charging was carried out to -0.42 V (0.2 V vs Li⁺/Li) at a rate of 0.5 IT on a Bi basis, then discharging was carried out to 1.38 V (2.0 V vs Li⁺/Li), and then charging was carried out to -0.42 V (0.2 V vs Li+/Li). The charge-discharge test of the test cell was performed in a 25°C constant temperature oven. Fig. 9 is a graph showing the results of the charge-discharge test of the test cell of Example 1. On the BiNi active material (theoretical capacity: 300 mAh/g) basis, the initial charge capacity was about 300.2 mAh/g. The discharge capacity and the charge capacity thereafter were about 271.5 mAh/g.

### (Reference Example 1)

### <Preparation of first electrode>

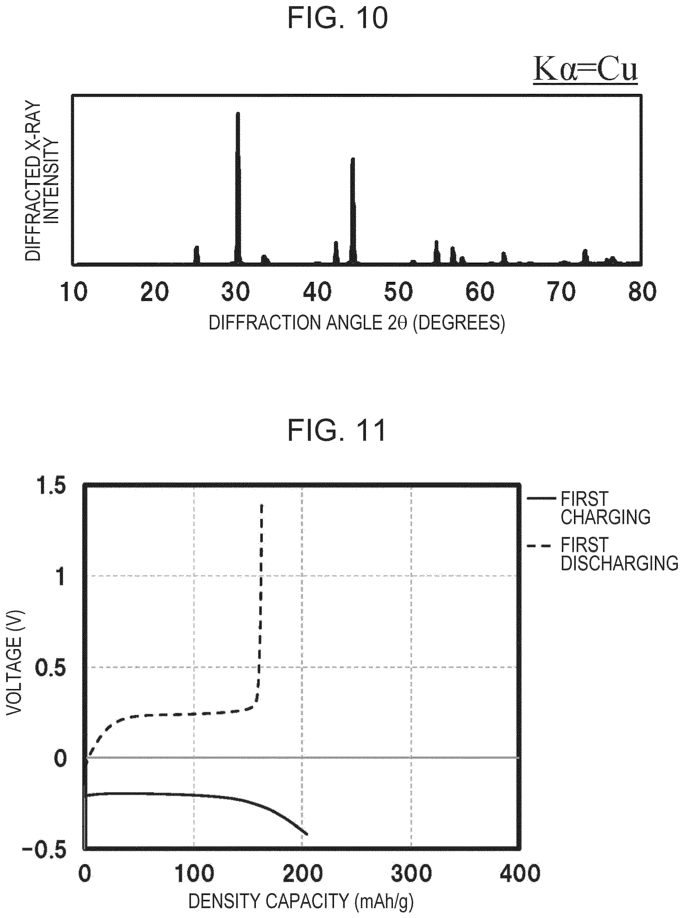

After a nickel foil (10 cm × 10 cm, thickness: 10 µm) was preliminarily degreased with an organic solvent as a preliminary treatment, one surface of the nickel foil was masked, and the nickel foil was immersed in an acidic solvent to perform degreasing and to activate the nickel foil surface. To 1.0 mol/L of methanesulfonic acid, bismuth methanesulfonate serving as a soluble bismuth salt was added so that the Bi³⁺ ion concentration was 0.18 mol/L so as to prepare a plating bath. The activated nickel foil was connected to a power supply so that current could be applied, and then immersed in the plating bath. Next, the un-masked surface of the nickel foil was electroplated with Bi by controlling the current density to 2A/dm² so that the thickness of the plating layer was about 5 µm. After electroplating, the nickel foil was recovered from the acidic bath, the mask was removed, and the nickel foil was washed with pure water and dried. Subsequently, the nickel foil electroplated with Bi was heat-treated at 400°C for 60 hours in an argon atmosphere in an electric furnace. After the heat treatment, surface X-ray diffractometry was performed on the Bi plating layer on the nickel foil. Fig. 10 is a graph indicating one example of an X-ray diffraction pattern of an active material layers constituted by a BiNi thin film prepared on a nickel foil.

### <Preparation of solid electrolyte>

A solid electrolyte having a composition represented by Li₃YBr₄Cl₂ was obtained as in Example 1.

### <Preparation of test cell>

A first electrode of Reference Example 1 that had a structure in which an active material layer 106 composed of BiNi was formed on a substrate 105 made of a nickel foil was used as the first electrode. A test cell of Reference Example 1 was obtained as with the test cell of Example 1 except for this point. The thickness of the first electrode serving as a working electrode was 1.5 µm, the thickness of the solid electrolyte layer was 500 µm, and the thickness of the counter electrode was 15 µm.

### <Charge-discharge test>

A charge-discharge test of the prepared test cell of Example 2 was conducted under the same conditions as in Example 1. Fig. 7 is a graph showing the results of the charge-discharge test of the test cell of Example 2. On the BiNi active material (theoretical capacity: 300 mAh/g) basis, the initial charge capacity was 203.9 mAh/g. The discharge capacity thereafter was 162.8 mAh/g, and the initial efficiency was 79.8%. In addition, the initial charge capacity and the initial discharge capacity were, respectively, 68.0% and 54.3% of the theoretical capacities.

Table 2 indicates the charge-discharge test results observed from the BiNi electrode (Reference Example 1) synthesized by heat-treating a nickel foil electroplated with Bi, the BiNi electrode (Example 1) synthesized by heat-treating a nickel mesh electroplated with Bi, the BiNi electrode (Example 2) synthesized by heat-treating a porous nickel electroplated with Bi, and the BiNi electrode (Example 3) obtained by heat-treating a porous nickel electroplated with Bi so as to synthesize BiNi and then forming a second solid electrolyte thereon.

**[Table 2]**

| Sample | Reference Example 1 (nickel foil) | Example 1 (nickel mesh) | Example 2 (porous nickel) | Example 3 (porous nickel / second solid electrolyte |
|---|---|---|---|---|
| Initial efficiency [%] | 79.8 | 83.3 | 83.2 | 90.4 |
| Initial charge capacity [mAh/g] | 203.9 | 272.7 | 300.0 | 300.2 |
| Initial discharge capacity [mAh/g] | 162.8 | 227.1 | 249.7 | 271.5 |

Table 2 indicates that the electrode that used BiNi as an active material exhibited improved initial efficiency and load characteristics since a porous body was used as the substrate, that is, since the substrate was a nickel mesh as in Example 1 or a porous mesh as in Examples 2 and 3.

Such results indicate that, by using a porous body as a substrate, the electrode that uses BiNi as an active material exhibits notably improved initial efficiency and load characteristics. In other words, the battery of the present disclosure equipped with a first electrode that included a substrate including a porous body, and a BiNi-containing active material layer on a surface of the substrate was confirmed to have a structure suitable for improving the charge-discharge characteristics. Examples described here used a halide solid electrolyte Li₃YBr₄Cl₂, however, the same effects can be expected from other typical solid electrolytes as well.

Furthermore, comparison of Example 3 and Example 2 reveals that the charge-discharge characteristics of the battery are further improved by using an electrode that includes a second solid electrolyte that is disposed on the surface of the substrate including a porous body, and is in contact with the active material layer as in Example 3. Although a halide solid electrolyte Li₃YBr₄Cl₂ was used as the second solid electrolyte in Example 3 of the present application, the same effects can be expected from other typical solid electrolytes as well.

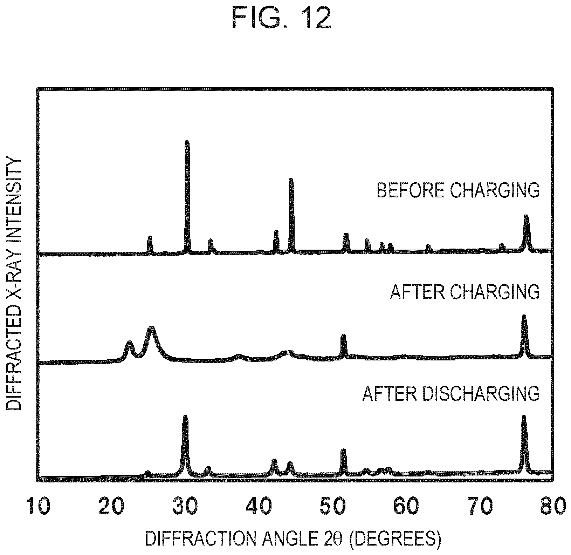

The first electrode prepared in Example 1 was analyzed with surface X-ray diffractometry using Cu-Kα radiation to confirm the substances present in the first electrode in a charged state. Note that the test cell used for this was different from the test cell of Example 1 and was a test cell that used an electrolyte solution. Specifically, the first electrode prepared in Example 1 was used as a working electrode, a Li metal was used as the counter electrode, and a solution prepared by dissolving LiPF₆ in vinylene carbonate to a concentration of 1.0 mol/L was used as the electrolyte solution. The Li metal used as the working electrode was double coated with a microporous separator (Celgard 3401 produced by Asahi Kasei Corporation). This test cell was charged and discharged at a constant current of 0.6 mA (0.15 mA/cm²) to 0 V and to 2 V, respectively. The X-ray diffraction pattern was measured by a θ-2θ method with Cu-Kα radiation having wavelengths of 1.5405 Å and 1.5444 Å as X-rays by using an X-ray diffractometer (MiNi Flex produced by RIGAKU Corporation). Fig. 12 is a graph indicating one example of X-ray diffraction patterns of the first electrode used in Example 1 before charging, after charging, and after discharging. According to the obtained X-ray diffraction patterns, BiNi and Ni could be identified, that is, compounds derived from the active material and the substrate, respectively, could be identified, before charging. After the charging, LiBi, Li₃Bi, and Ni could be identified. In other words, it was found that LiBi and Li₃Bi were generated after charging. After discharging, BiNi and Ni could be identified. Here, although the substances present in the first electrode after charging were confirmed for the test cell that used the electrolyte solution, it is considered that even in the cell of Example 1 in which a solid electrolyte was used in the electrolyte layer, at least one selected from the group consisting of LiBi and Li₃Bi would be generated.

### Industrial Applicability

The battery of the present disclosure can be applied to, for example, an all-solid lithium secondary battery.

### Reference Signs List

1000 battery
2000 battery
100 first current collector
101 first electrode
102 solid electrolyte layer
103 second electrode
104 second current collector
105 substrate
106 active material layer
107 second solid electrolyte layer

## Claims

1. A battery comprising:
a first electrode;
a second electrode; and
a solid electrolyte layer disposed between the first electrode and the second electrode,
wherein the solid electrolyte layer contains a first solid electrolyte,
the first electrode includes:
a substrate including a porous body; and
an active material layer disposed on a surface of the substrate, and
the active material layer contains an alloy that contains Bi and Ni.

2. The battery according to claim 1,
wherein the active material layer contains BiNi.

3. The battery according to claim 2,
wherein the active material layer contains the BiNi as a main component of an active material.

4. The battery according to claim 3,
wherein the active material layer contains substantially only the BiNi as the active material.

5. The battery according to claim 2, wherein the BiNi has a crystal structure of a space group C2/m.

6. The battery according to claim 1,
wherein the active material layer contains at least one selected from the group consisting of LiBi and Li₃Bi.

7. The battery according to claim 1,
wherein the active material layer is free of an electrolyte.

8. The battery according to claim 1,
wherein the substrate contains Ni.

9. The battery according to claim 1,
wherein the active material layer is a heat-treated plating layer.

10. The battery according to claim 1,
wherein the first solid electrolyte contains a first halide solid electrolyte, and
the first halide solid electrolyte is substantially free of sulfur.

11. The battery according to claim 1,
wherein the first solid electrolyte contains a first sulfide solid electrolyte.

12. The battery according to claim 1,
wherein the first electrode further includes a second solid electrolyte in contact with the active material layer.

13. The battery according to claim 12,
wherein the second solid electrolyte contains a second halide solid electrolyte, and
the second halide solid electrolyte is substantially free of sulfur.

14. The battery according to claim 13,
wherein the second halide solid electrolyte is represented by formula (1) below:
formula (1): Li_{α}M_{β}X_{γ}
where α, β, and γ are each a value greater than 0,
M is at least one selected from the group consisting of metalloids and metal elements other than Li, and
X is at least one selected from the group consisting of F, Cl, Br, and I.

15. The battery according to claim 14,
wherein M in formula (1) contains Y.

16. The battery according to claim 14,
wherein X in formula (1) is at least one selected from the group consisting of Cl, Br, and I.

17. The battery according to claim 14,
wherein the second solid electrolyte contains at least one selected from the group consisting of Li₃YBr₃Cl₃ and Li₃YBr₂Cl₄.

18. The battery according to claim 12,
wherein the second solid electrolyte contains a second sulfide solid electrolyte.

19. The battery according to claim 12,
wherein pores in the substrate contain the second solid electrolyte.

20. The battery according to claim 1,
wherein the first electrode is a negative electrode, and
the second electrode is a positive electrode.
